**Europäisches Patentamt**

**European Patent Office**

**Office européen des brevets**

(11) Numéro de publication: **0 043 336**

**A1**

## (12) DEMANDE DE BREVET EUROPEEN

(21) Numéro de dépôt: **81430017.4**

(22) Date de dépôt: **22.06.81**

(51) Int. Cl.³: **G 09 B 25/00**
**G 09 B 1/36**

(30) Priorité: **23.06.80 FR 8014179**

(43) Date de publication de la demande:
**06.01.82 Bulletin 82/1**

(84) Etats contractants désignés:
**AT BE DE GB IT**

(71) Demandeur: **Malengé, Jean Pierre Albert Henri**
**33, Corniche André de Joly**
**F-06300 Nice(FR)**

(72) Inventeur: **Malengé, Jean Pierre Albert Henri**
**33, Corniche André de Joly**
**F-06300 Nice(FR)**

(54) Procédé de représentation d'un arbre généalogique dans l'espace à l'aide de figurines tridimensionnelles.

(57) La présente invention permet de matérialiser dans l'espace les liens de parenté entre les personnes que des figurines tridimensionnelles sont censées représenter et qui peuvent être identifiées grâce aux indications biographiques qu'elles portent : photos, dessins, textes, dates ... Les figurines (1), (2), (3), (4) comportent des parties mobiles (5), (6) en rotation permettant d'utiliser tout l'espace pour représenter les arbres généalogiques complexes. Les figurines peuvent être reliées entr'elles par un dispositif spécifique matérialisant le lien de filiation (7), par un autre dispositif spécifique matérialisant le lien de fraternité (8) et par un autre dispositif spécifique matérialisant le lien de mariage (9), et plus généralement le lien sexuel.

La présente invention a des apllications dans le domaine des jeux et de l'enseignement de l'histoire et de la mythologie par exemple, ainsi que pour les besoins de certains professionnels : notaires, généalogistes, romanciers, hstoriens, héraldistes, généticiens, spécialistes des pedigrees (les figurines représentant alors des animaux)...

fig 6

EP 0 043 336 A1

- 1 -

Procédé de représentation d'un arbre généalogique dans l'espace à l'aide de figurines tridimensionnelles.

Le domaine d'application de la présente invention est la visualisation dans l'espace des liens de parenté unissant un groupe de personnes. Cette visualisation peut faciliter le travail de certaines personnes : notaires, généalogistes, historiens..., peut servir de motif décoratif, peut être à la base de certains jeux et peut être utilisée à des fins pédagogiques et à bien d'autres activités.

A l'heure actuelle, il existe des procédés représentant les arbres généalogiques dans un seul plan, ce qui limite les possibilités de représentation et, a fortiori, la facilité de compréhension, car les relations entre les différentes personnes sont forcément emmêlées dans le même plan.

Pour pallier ces inconvénients, la présente invention permet la visualisation distincte des trois liens de parenté : filiation, fraternité mariage (dans tout ce qui suit, on entendra, par abus de langage, par "lien de mariage" le lien qui existe entre deux personnes qui sont effectivement mariées, ou dont on souhaite représenter l'union sexuelle). Ces trois types de liens sont matérialisés par des éléments différents reliant entre elles les figurines représentant les personnages de l'arbre généalogique à visualiser. L'utillsation des trois dimensions de l'espace permet de distinguer facilement la parenté qui unit deux personnages car, contrairement au cas des représentations planes, il n'y a pas d'ambigüité ni de recoupement.

Les figurines sont en trois dimensions et constituées d'éléments de formes et de dimensions différentes, dont certains sont mobiles, ce qui permet en les assemblant de représenter facilement tout arbre généalogique, quelque soit sa complexité : en effet, dans un espace à trois dimensions, il est facile de s'affranchir des problèmes d'encombrement et de recouvrement. Il est en particulier facile de représenter les mariages successifs d'une même personne car une figurine peut être reliée à plusieurs autres au niveau des liens du mariage ; il est de plus facile de représenter les enfants de différents lits très distinctement puisque le lien de filiation relie un enfant au lien matérialisant l'union de ses géniteurs ; il n'y a enfin aucune limite au nombre de frères et soeurs qu'il est possible de représenter car le lien de fraternité est représenté de façon binaire et toute figurine peut être reliée à deux frères ou soeurs.

La présente invention est constituée de figurines formées d'éléments distincts de formes soit géométriques soit figuratives, de dimensions différentes et reliés entr'eux. Certains de ces éléments sont mobiles et peuvent tourner autour d'un axe, ce qui permet aux différentes liaisons entre les figurines d'être orientées dans tout l'espace.

Chaque figurine comprend au moins :
- un élément servant de socle, relié à l'axe de liaison des divers éléments de cette figurine,
- un autre élément représentant la bassin, pivotant librement autour de l'axe de liaison de la figurine et comportant plusieurs moyens d'attache : électrique, magnétique, mécanique tels que pression, crochet, évidement, filetage, tenon... du lien du mariage qui sera décrit ci-dessous,
- un autre élément représentant les épaules et les bras, pivotant librement autour de l'axe de liaison,
- un autre élément représentant la tête, relié à l'autre extrémité de l'axe de liaison et comportant un moyen d'attache du même type permettant d'y fixer un lien de filiation qui sera décrit plus loin.

Ces éléments peuvent être complétés par d'autres éléments soit fixes soit mobiles destinés à améliorer le coté esthétique et pratique des figurines.

Les figurines peuvent être reliées entr'elles au niveau des bras par un dispositif figurant le lien de fraternité, au niveau des bassins par un dispositif figurant le lien du mariage, ce dispositif comportant lui-même un moyen d'attache du lien de filiation dont l'autre extrémité sera attachée à la tête d'un des enfants de ce couple.

Pour une meilleure compréhension de cette invention, il est donné, à titre d'exemple non limitatif, un mode de réalisation se référant aux dessins ci-annexés :

fig. 1 : vue de face d'une figurine représentant un personnage masculin ;
fig. 2 : vue de face d'une figurine représentant un personnage féminin ;
fig. 3 : vue de dessus d'un élément représentant les épaules et les bras ;
fig. 4 : vue de face d'un élément représentant le bassin ;
fig. 5 : vue de face d'un élément représentant le lien du mariage ;
fig. 6 : vue perspective d'un groupe de figurines représentant un couple
et ses deux enfants.

La figurine 1 montre de face une figurine représentant un personnage masculin. Cette figurine comporte un socle (1) sur lequel est fixé l'axe de liaison (2) dont l'extrêmité supérieure est elle-même fixée à l'élément (8) représentant la tête. On remarque que la tête (8) et l'axe (2) sont reliés de façon à laisser un évidement (9) dans lequel pourra venir s'insérer l'extrêmité d'une tige amovible représentant le lien de filiation. Sur l'axe (2) s'enfilent successivement de bas en haut l'élément fixe (3) représentant les jambes, l'élément (4) représentant le bassin, pivotant autour de l'axe (2) et dans lequel sont prévus des évidements (10), dans ce mode de réalisation, permettant de loger des extrémités du dispositif représentant le lien du mariage, l'élément (5) représentant le tronc, l'élément (6) représentant les épaules, sur lequel viennent se fixer les bras (7). De plus, afin de pouvoir personnaliser la figurine, c'est-à-dire préciser certains renseignements biographiques du personnage représenté, il a été prévu, dans ce mode de réalisation, de pouvoir fixer des étiquettes, soit en les enfilant dans l'axe entre deux éléments, soit sur les éléments eux-mêmes, soit dans des encoches pratiquées dans le socle.

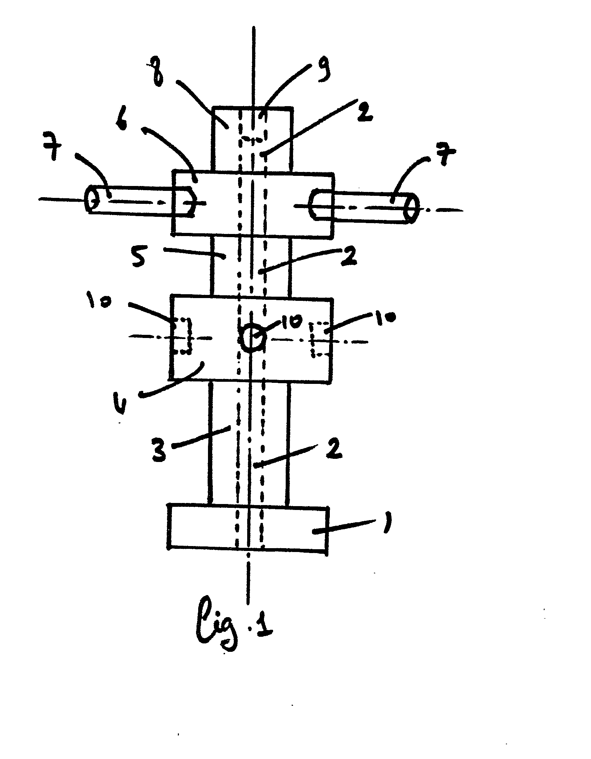

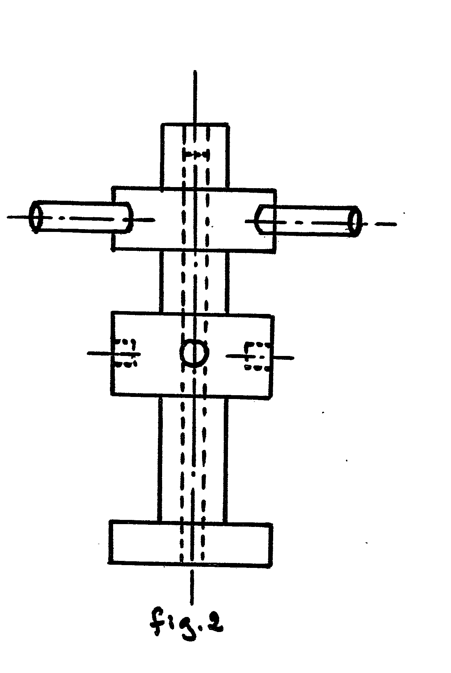

La figure 2 montre de face une figurine représentant un personnage féminin qui comporte des éléments similaires à ceux du personnage masculin de la figure 1 mais dont certains sont, dans ce mode de réalisation, différents par certaines cotes, dans le but de différencier plus facilement à l'oeil des figurines masculines et féminines.

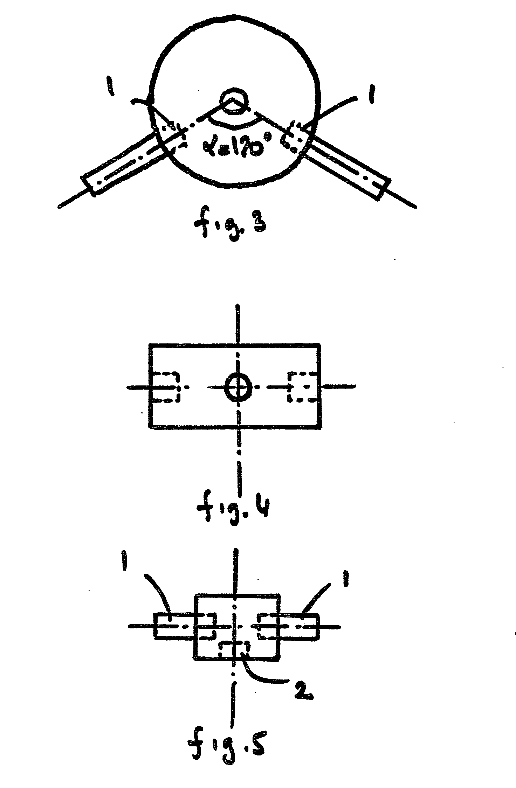

La figure 3 montre de dessus un élément figurant les épaules, numéroté (6) sur la figure 1. L'angle de 120° entre les évidements (1) destinés à recevoir les bras - numérotés (7) sur la figure 1 - n'est pas critique : il est cependant préférable qu'il soit différent de 180° afin de pouvoir disposer les frères et soeurs sur une ligne brisée, ce qui

- 4 -

permet de résoudre certains problèmes posés par des arbres généalogiques touffus.

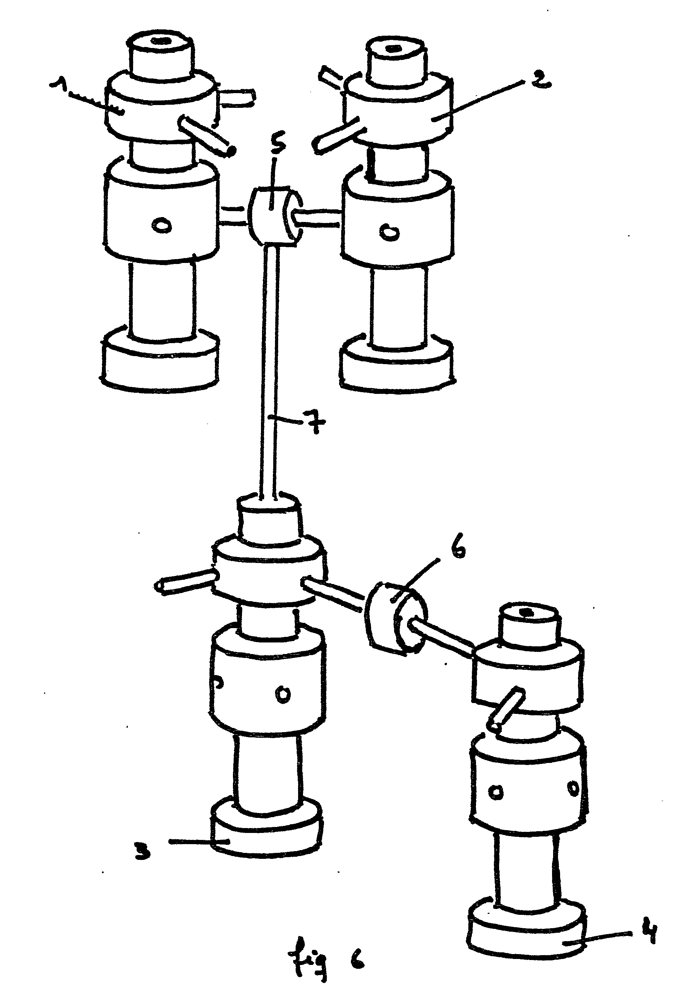

La figure 4 montre de face un élément représentant le bassin qui comporte plusieurs évidements (1) permettant de recevoir chacun un dispositif représentant le lien du mariage ; ainsi, dans ce mode de réalisation, une figurine peut être unie par les liens du mariage à 1,2,3 ou 4 autres figurines.

Le lien de fraternité (6) sur la figure 6 est matérialisé, dans ce mode de réalisation, par un simple manchon cylindrique dans lequel viennet s'enfoncer de part et d'autre les extrémités d'un des bras des deux figurines à relier.

La figure 5 montre de face l'élément matérialisant le lien du mariage : les deux extrémités (1) s'enfoncent dans un des évidements du bassin des deux figurines à unir ; l'évidement (2) est destiné à recevoir une tige matérialisant le lien de filiation (7) sur la figure 6, tige dont l'autre extrémité sera enfoncée dans l'élément figurant la tête d'un des enfants de ce couple. Il est évident que si un enfant est né de père ou de mère inconnu, l'élément matérialisant le lien du mariage peut n'être relié qu'à la figurine représentant le géniteur connu, ce détail étant particulièrement appréciable lorsqu'il s'agit de représenter des arbres généalogiques historiques ou mythiques.

La figure 6 représente un groupe de figurines composé de 4 personnages : le père (1),la mère (2) et leurs deux enfants (3) et (4). Cette figure permet de bien comprendre les positions des trois dispositifs matérialisant les trois types de lien de parenté : le lien du mariage (5), le lien de fraternité (6) et le lien de filiation (7).

Il faut préciser enfin que certains arbres généalogiques présentent des complications extrêmes qu'il est néanmoins facile de représenter grâce à la présente invention : à titre indicatif, il n'y a aucune difficulté à représenter le cas de deux frères mariés à deux soeurs ; de même, le cas d'un homme marié à deux soeurs (ou d'une femme mariée à deux frères) se représente facilement grâce à des longueurs des bras et dudispositif représentant le lien du mariage choisies en rapport avec l'angle entre les bras d'une part, et avec l'angle entre les évidements dans les bassins d'autre part ; de même , le cas extrême d'un individu marié à deux personnes appartenant à des générations différentes pourra être représenté grâce à un dispositif souple et simple tel que téléscopi- que, permettant de prolonger l'une des extrémités du lien de la figure 5, de façon à lui permettre d'atteindre une figurine éloignée. De même des pièces annexes telles que tige, plateaux... servent à stabiliser l'ensemble du montage si le besoin s'en fait sentir.

La représentation décrite ci-dessus peut être rendue plus esthétique en utilisant des éléments plus figuratifs et moins stylisés ; on pourra également dans ce but utiliser des couleurs attrayantes permettant de plus de différencier les personnages entr'eux et de partitionner l'arbre selon les liens du sang. Dans ce but encore, on pourra placer sur les figurines et sur les liens de parenté des étiquettes comportant des renseignements biographiques tels que nom, prénom, surnom, appellation familière, date et lieu de naissance, date et lieu du baptême, nom des parrains et marraines, adresse, profession, dates et lieux des mariages civil et religieux, nom des témoins, nom du notaire rédacteur et type du contrat de mariage, titres honorifiques ou professionnels, dates de règne, date, lieu et cause du décès, lieu d'inhumation... cette liste pouvant être allongée au gré de l'utilisateur de la présente invention. Toujours dans ce même but, on pourra également placer sur les figurines des photos, dessins et plus généralement tout autre dispositif permettant de les identifier.

L'intérêt de la présente invention dans le domaine éducatif est de faciliter l'enseignement de la notion de lien de parenté aux jeunes enfants qui ont souvent des difficultés à comprendre que des adultes sont unis par des liens de fraternité du même type que ceux qui les unissent à leurs propres frères et soeurs et à comprendre que les adultes soient liés entr'eux par des liens de filiation. Dans le domaine pédagogique, l'intérêt de la présente invention est de faciliter l'enseignement de l'histoire et de la mythologie entr'autres, grâce à un support concret permettant aux élèves d'assimiler plus facilement les arbres généalogiques souvent complexes dont on leur parle.

L'intérêt de la présente invention dans de nombreux domaines professionnels est tout aussi évident : on peut citer par exemple le romancier qui aura toujours sous les yeux ses personnages, le notaire aux prises avec une succession délicate dont les héritiers eux-mêmes ne comprennent qu'imparfaitement les liens éloignés qui les unissent, le généalogiste et l'historien, mais aussi l'héraldiste, le généticien et le spécialiste chargé d'établir des pedigreees de la gent canine, équine, bovine... car les figurines peuvent aussi bien représenter des animaux que des êtres humains.

L'intéret de la présente invention dans le domaine ludique est multiple. Sans que cette énumération soit limitative, il est possible de citer un premier jeu dont le but est de reconstituer correstement des figurines dont les éléments porteurs de renseignements biographiques ont été mélangés. Un second jeu s'apparente à la famille des jeux de dominos : chaque figurine porte un nom différent ; l'ensemble des figurines est distribué entre les joueurs et la pioche ; un ensemble de liens de parenté d'une famille réelle ou fictive est connu des joueurs, cet ensemble de liens pouvant être différent d'une partie à l'autre ; chaque joueur joue successivement et doit accrocher une de ses figurines à celles déjà posées en respectant les liens de parenté ; s'il ne le peut pas, il pioche jusqu'à ce qu'il puisse ; le vainqueur est celui qui a posé toutes ses figurines. Dans une variante de ce jeu, les joueurs ne connaissent pas l'ensemble des liens de parenté, mais uniquement un sous-ensemble, suffisant toutefois pour déterminer de manière unique une famille. On pourra fournir dans le jeu soit un ensemble fini de familles, soit un appareil, électronique, par exemple, permettant d'obtenir à la demande et au hasard la liste des liens d'une famille. Enfin, les figurines étant démontables, leurs parties pourront servir à la visualisation d'autres objets, selon l'esprit créatif des utilisateurs.

- 7 -

REVENDICATIONS

1.- Procédé de représentation d'un arbre généalogique caractérisé par le fait qu'il comporte des figurines à trois dimensions composées d'éléments fixes et d'éléments mobiles avec des moyens de liaison permettant de les relier entr'elles, et dont la combinaison assure la matérialisation, dans l'espace, des liens de parenté : filiation, fraternité, mariage, applicable aux activités ludiques, éducatives, professionnelles.

2.- Procédé de représentation d'un arbre généalogique, selon la revendication 1, caractérisé par le fait que les éléments possédant pour assurer les liaisons des moyens d'attache de type : évidement, filetage, manchon, aimant, crochet, pression, clipsage...

3.- Procédé de représentation d'un arbre généalogique, selon la revendication 1, caractérisé par le fait que l'un des moyens de liaison comporte au moins trois extrémités pour assurer la liaison entre plusieurs figurines.

4.- Procédé de représentation d'un arbre généalogique, selon la revencation 1, caractérisé par le fait que les éléments constituant les figurines sont soit de formes géométriques, soit figuratives.

5.- Procédé de représentation d'un arbre généalogique, selon la revendication 1, caractérisé par le fait que l'élément servant de socle peut comporter soit une rainure, soit un guide destinés à recevoir un support sur lequel sont placés des indications personnalisant la figurine.

6.- Procédé de représentation d'un arbre généalogique, selon la revendication 1, caractérisé par le fait que les trois dimensions de l'espace sont simultanément utilisées dans le but de représenter sans recoupement nicroisement les arbres généalogiques complexes.

0043336

PL 1/4

Fig. 1

fig.2

$\alpha \approx 120°$

fig. 3

fig. 4

1        1

2

fig. 5

fig 6

**0043336**
Numéro de la demande

**Office européen des brevets**

## RAPPORT DE RECHERCHE EUROPEENNE

EP 81 43 0017

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 1 195 038 (R. ALLASSEUR) <br> * en entier * | 1,2,4, 5,6 | G 09 B 25/00 <br> G 09 B 1/36 |
| | DE - C - 140 167 (P.W. GEE) <br> * en entier * | 1,2, 4-6 | |
| | FR - A - 2 189 804 (E. AKONTZ et al.) <br> * figures 1-4; revendications * | 1,2,4 | **DOMAINES TECHNIQUES RECHERCHES (Int. Cl.³)** <br><br> G 09 B 25/00 <br> 1/00 <br> A 63 H 33/08 <br> A 63 F 9/06 <br> G 09 B 1/32 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

☒ Le présent rapport de recherche a été établi pour toutes les revendications

| Lieu de la recherche | Date d'achèvement de la recherche | Examinateur |
|---|---|---|
| La Haye | 08.09.1981 | CARDON |

OEB Form 1503.1 06.78